# NEW EUROPEAN PATENT SPECIFICATION

(11) **EP 0 414 786 B2**
(45) Date of publication and mention of the opposition decision: **08.05.1996**
(45) Mention of the grant of the patent: 28.07.1993
(21) Application number: 89906182.4
(22) Date of filing: 19.05.1989
(51) Int. Cl.: D07B 1/16

(54) **CORES FOR WIRE ROPES**
SEELEN FÜR DRAHTSEILE
AMES POUR CABLES EN FILS METALLIQUES

(30) Priority: 19.05.1988 GB 8811807
(43) Date of publication of application: 06.03.1991
(73) Proprietor: BRIDON PLC, Doncaster, South Yorkshire DN4 8DG (GB)
(72) Inventor: WALTON, John, Mawson, Sprotborough Doncaster DN5 7LP (GB); BURTOFT, Michael, Thomas, West Bessacarr Doncaster DN4 7SA (GB)
(74) Representative: Godwin, Edgar James
(86) International application number: GB8900549
(87) International publication number: WO8911559

(56) References cited:
- FR-A- 1 601 293
- GB-A- 1 391 355
- GB-A- 1 432 341
- GB-A- 2 144 779
- LU-A- 65 444
- SU-A- 500 305
- SU-A- 622 904
- US-A- 2 480 005
- US-A- 4 120 145

## Description

This invention relates to cores for wire ropes, particularly steel wire ropes.

Traditionally the cores for wire ropes have been manufactured from natural staple fibres such as sisal, or more recently from man-made fibres such as nylon or fibrillated polypropylene yarns. For more arduous duties cores may alternatively be manufactured from steel wire, as specified for example in British Standard BS:302.

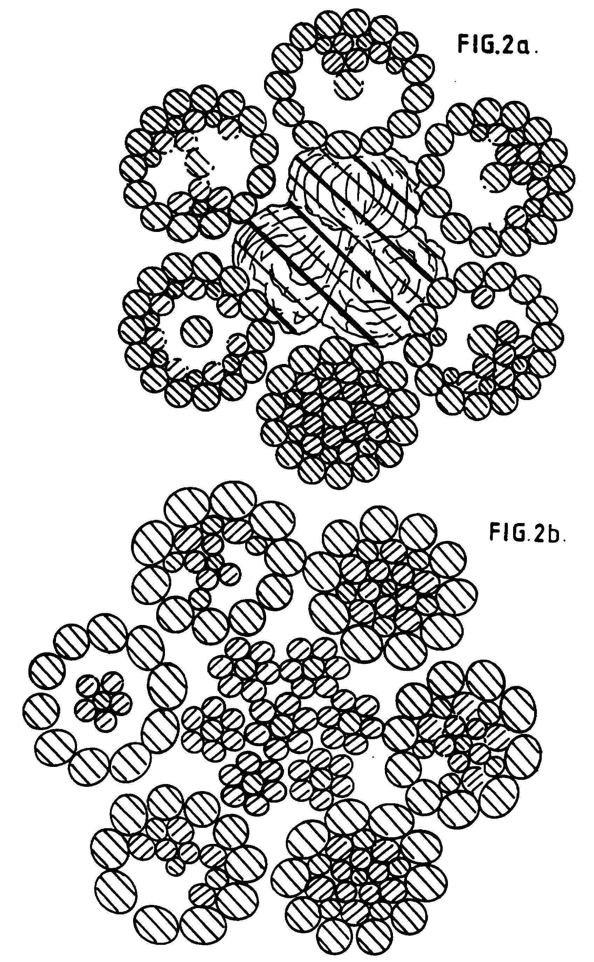

Fibre cores for wire ropes are typically manufactured in a three-strand construction, such as that shown in Figure 2a of the accompanying drawings, which is easy to produce and offers high flexibility but does not provide very uniform support for the overlying strands of the rope, which make only intermittent contact. This disadvantage is partially overcome by the distortion of the core which takes place as the strands are compressed into it during the rope closing operation. Further compaction of the core occurs during use of the rope but this inevitably results in rope stretch which must be allowed for.

Steel cores for ropes, such as that shown in Figure 2b, often take the form of an independent wire rope, which provides a reasonably flexible, stable support member which is particularly resistant to crushing forces. However, this type of core provides only intermittent contact with the outer strands of the rope. At these points of contact, very high compressive stresses are incurred, which frequently cause plastic yielding of the core and strand materials. These stresses contribute to the fatigue mechanisms when the rope is dynamically loaded and may cause internal wire breaks which are not easily observed.

US-A-2 480 005 discloses a wire rope having an elastic core of rubber or synthetic rubber. The outer strands become embedded in the elastic core during closing of the rope.

GB-A-1 391 355 discloses a wire rope having a core with a plastic or rubber sheathing. The strands are embedded in the sheathing of the core.

US-A-4 120 145 discloses a wire rope with a core composing thermoplastic material. The strands are embedded in the thermoplastic material, which are thereby held out of contact with one another.

SU-A-622 904 corresponds to the preamble of claim 1.

This invention seeks to overcome the aforementioned deficiencies of the conventional core materials, by substituting a fluted core which provides a much enlarged area of contact with the outer strands. This results in lower contact stresses, less compaction of the core, and reduced rope stretch in service.

The invention provides a wire rope as set forth in claim 1.

Preferred and optional features are set forth in claims 2 et seq.

The core is provided with helical grooves or flutes which are elliptical in profile to conform closely to the shape of the outer strands of the rope. These flutes may be formed for example by extrusion through a rotating die, the profile of which relates to the internal contours of the outer layer of strands of the rope. The fluted core can be composed of a homogeneous polymer; preferred examples of such materials are polypropylene, polyethylene, and Hytrel (Trade Mark - DuPont). However, the properties and control of manufacture of the core may be substantially improved by incorporating within the extrusion a reinforcing member or core which may for example be a plastic rod, a fibre core or an independent wire rope. The reinforcing member may be substantially equal in size to one of the strands. The reinforcing member may contain a lubricating medium, if this is compatible with the extrusion process.

During manufacture of the fluted core, which precedes the closing of the rope and may be an entirely separate operation, the pitch of the helical grooves in the core is controlled, for example by regulating the speed of the rotating die in the extruder crosshead relative to the linear speed of the rope haul-off device. The core pitch is made slightly shorter than the rope lay and then adjusted (untwisted) accordingly during the rope closing operation to bring it into conformity with the lay of the rope.

This has the effect of tightening up the rope structure, whereas the opposite practice of starting with a fluted core having a substantially longer pitch than the rope lay (or even straight grooves) would have the undesirable effect of slackening off the rope structure.

Based on these considerations, the pitch of the fluted core is less than the helical pitch of the strands in the rope, being at least 75 %, preferably at least 95% of the lay.

The invention will be described further, by way of example, with reference to the accompanying draw ings, in which:-
Figure 1 is a diagrammatic cross-section through a fluted core for a wire rope;
Figure 2a is a cross-section through a 6-strand wire rope with a conventional fibre core;
Figure 2b is a cross-section through a 6-strand wire rope with a conventional independent wire rope core;
Figure 3a is a cross-section through a 6-strand wire rope with a solid fluted core;
Figure 3b is a cross-section through a 6-strand wire rope with a fluted core containing a fibre core;
Figure 3c is a cross-section through a 6-strand wire rope with a fluted core containing a steel core;
Figure 4a is a cross-section through an 8-strand wire rope with a fluted core containing a steel core;
Figure 4b is a cross-section through a 6-strand wire rope with a fluted core containing optical fibres; and
Figure 4c is a cross-section through a 9-strand wire rope with compacted strands and a fluted core containing four insulated copper conductors.

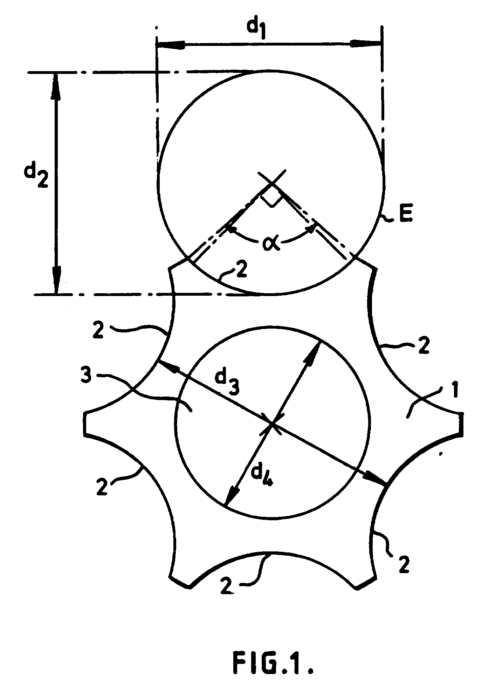

The fluted core 1 illustrated in Figure 1 is an extruded member of polymeric material having six shallow grooves 2 which extend helically along the core and are equally spaced around its outer surface. The profile of each groove 2 (in the cross-section normal to the axis of the core) is an arc of an ellipse E whose minor diameter extends through the centre of the core. The major dimension of the ellipse E is d₁ and the minor dimension is d₂ (equal to the diameter of the strand which is to be closed onto the core). The root diameter of the core is d₃. A central region 3 having a diameter, d₄, may be occupied by a reinforcing member.

The profile of the fluted core should preferably be designed to maximise the area of contact with the outer strands by attention to the depth of the helical groove. For a six strand rope the angular arc of contact, α, should be at least 90°, as shown in Figure 1, in which α is about 95°, with corresponding larger or smaller angles, respectively, when fewer or greater numbers of strands are employed.

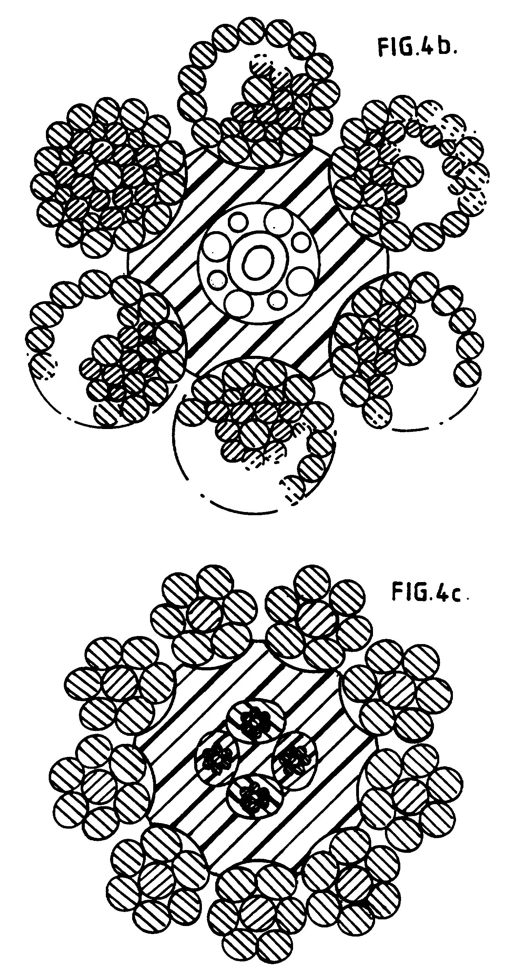

Additional strength and stiffness may be gained by using a reinforced (e.g. glass fibre reinforced) polymeric material in the extrusion process. e.g. Verton (Trade Mark - ICI). The area of contact with the core may be further increased if the outer strands of the rope are Dyform (Trade Mark - Bridon plc) strands, which have a compacted structure as shown, for example, in Figure 4c.

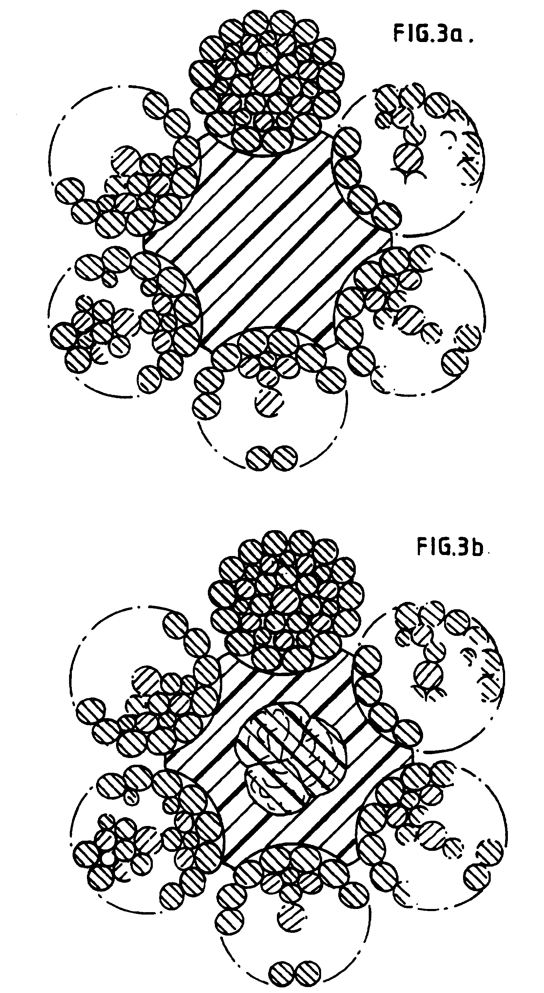

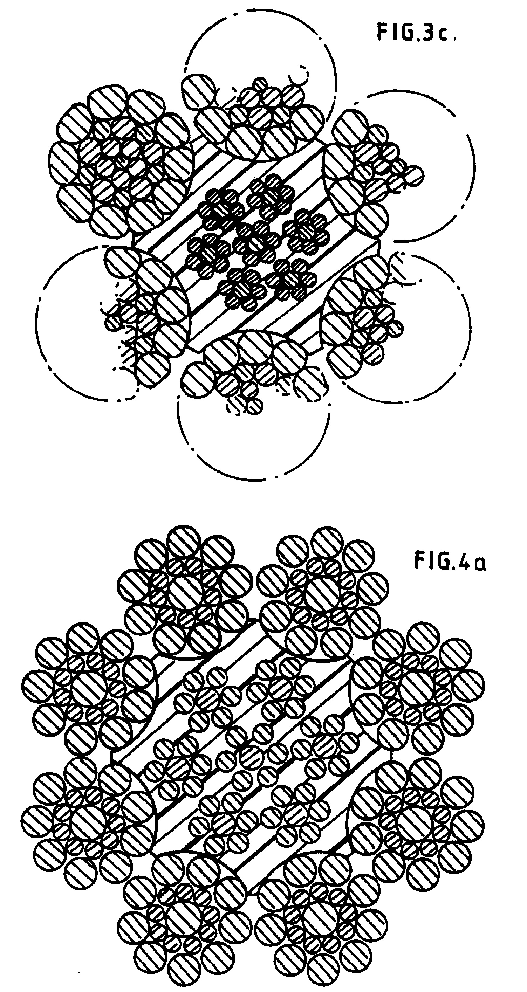

Where a steel strand or rope (Figures 3c and 4a) is used to reinforce the fluted core, the size of the core rope may be selected to best suit the application of the finished product. For example, where maximum weight and strength are required, the diameter of the central steel member may closely approach that of the central hole in the rope, whereas for another, e.g. lightweight, application the central steel member may be only half as large.

For ropes on which a long splicing operation is to be carried out, the size of the reinforcing member may be advantageously equivalent to the outer strands of the rope so that the fluted jacket can be used to wrap the strand tails.

For applications where low rope stretch is of critical importance, the elongation characteristics of the rope may be further reduced by increasing the rope lay, for example from 6-6.5 x rope diameter to 7-9 x rope diameter, to reduce the pressure on the fluted core member.

For more specialised applications the fluted core member may contain one or more insulated metallic (e.g. copper) conductors (as in Figure 4c) or optical fibre waveguides (as in Figure 4b).

The above-described ropes may have the following advantages:
better rope size stability;
reduced rope stretch under load;
increased bend fatigue performance (owing to exclusion of metal to metal contact);
safer mode of failure in fatigue (owing to fewer internal wire breaks);
improved rope appearance (equalisation of strand gaps);
avoidance of internal corrosion with steel reinforced rope cores.

## Claims

1. A wire rope which ccmprises wire strands of a given diameter extending helically and being symmetrically spaced around a core comprising a fluted solid extruded member (1) of polymeric material, optionally containing a central reinforcing member of fibrous material or metallic material, the fluted member (1) having helical grooves (2) symmetrically spaced around its outer surface, the spacing of the grooves (2) being such that the wire strands, which are accommodated in the respective grooves, are out of contact with one another, each groove (2) - in cross-section in a plane normal to the longitudinal axis of the core - having the form of an arc of an ellipse (E) whose minor axis intersects the core axis, the minor dimension (d₂) of the ellipse (E) being equal to the said given diameter, characterised in that the angular extent (α) of the arc with respect to the point of intersection of the major and minor axes of the ellipse (E) being at least equal to (360/n)+30 degrees, where n is the number of grooves (2), the helical pitch of the grooves (2) of the unstressed core, in the absence of the strands, being less than the helical pitch of the strands in the rope so that the effect of tightening up the rope structure is provided.

2. A wire rope as claimed in claim 1, in which the diameter of the reinforcing member is 80 to 95% of the root diameter (d₃) of the fluted member (1).

3. A wire rope as claimed in claim 1, in which the diameter of the reinforcing member is 50 to 80% of the root diameter (d₃) of the fluted member (1).

4. A wire rope as claimed in any preceding claim, in which the plastics material of the fluted member (1) contains discontinuous reinforcing fibres.

5. A wire rope as claimed in any preceding claim, in which the helical pitch of the grooves (2) of the unstressed core, in the absence of the strands, is at least 75%, preferably at least 95%, of the helical pitch of the strands in the rope.

6. A wire rope as claimed in any preceding claim, in which each strand - in cross-section normal to the axis of the core - has a compacted structure in which the outer wires have external edges which are arcs of an ellipse circumscribing the strand.

7. A method of making a wire rope which comprises wire strands of a given diameter extending helically at a given pitch and being symmetrically spaced around a core, the method comprising:
(a) providing, from core supply means, a core comprising a fluted solid extruded member (1) of polymeric material, optionally containing a central reinforcing member of fibrous or metallic material, the fluted member (1) having helical grooves (2) symmetrically spaced around its outer surface, each groove (2) - in cross-section in a plane normal to the longitudinal axis of the core - having the form of an arc of an ellipse (E) whose minor axis intersects the core axis, the minor dimension (d₂) of the ellipse (E) being equal to the said given diameter, characterised in that the angular extent (α) of the arc with respect to the point of intersection of the major and minor axes of the ellipse (E) being at least equal to (360/n)+30 degrees, where n is the number of grooves (2), the spacing of the grooves (2) being such that the wire strands will be out of contact with one another, the helical pitch of the grooves (2) being less than the said given pitch;
(b) feeding the core axially to a rope closing means simultaneously with strands being supplied from strand supply means rotating about the core axis, the strands being introduced into the grooves of the core by the rope closing means;
(c) withdrawing the rope from the closing means at a linear speed related to the speed of rotation of the strand supply means; and
(d) rotationally adjusting the core supply means so as to untwist the core to the extent necessary to match the groove pitch to the rope lay, so that the effect of tightening up the rope structure is provided.

## Patentansprüche

1. Drahtseil, das Drahtlitzen mit einem gegebenenen Durchmesser aufweist, die schraubenförmig verlaufen und symmetrisch im Abstand um einen Kern angeordnet sind, der ein geripptes, festes, extrudiertes Element (1) aus Polymer-Material umfaßt, das wahlweise ein in der Mitte befindliches Verstärkungselement aus Fasermaterial oder einem metallischen Material enthält, wobei das gerippte Element (1) schraubenförmige Rillen (2) hat, die symmetrisch im Abstand zueinander um dessen Außenfläche angeordnet sind, wobei die Rillen (2) einen solchen Abstand haben, daß die Drahtlitzen, die in den entsprechenden Rillen aufgenommen werden, keinen Kontakt miteinander haben, wobei jede Rille (2) - im Querschnitt in einer normalen Ebene zur Längsachse des Kerns - die Form eines Bogens einer Ellipse (E) hat, deren Nebenachse die Kernachse schneidet, wobei die kleinere Abmessung (d₂) der Ellipse (E) gleich dem gegebenen Durchmesser ist, dadurch gekennzeichnet, daß die Winkelöffnung (α) des Bogens im Verhältnis zum Schnittpunkt von Haupt- und Nebenachse der Ellipse (E) mindestens gleich (360/n) + 30° ist, wobei n die Zahl der Rillen (2) ist, und wobei die Schraubenlinien-Schlaglänge der Rillen (2) des unbelasteten Kerns beim Fehlen der Litzen kleiner als die Schraubenlinien-Schlaglänge der Litzen in dem Seil ist, so daß die Wirkung des Spannens der Seilstruktur gegeben ist.

2. Drahtseil nach Anspruch 1, bei dem der Durchmesser des Verstärkungselements 80 bis 95% des Fußkreisdurchmessers (d₃) des gerippten Elements (1) beträgt.

3. Drahtseil nach Anspruch 1, bei dem der Durchmesser des Verstärkungselements 50 bis 80% des Fußkreisdurchmessers (d₃) des gerippten Elements (1) beträgt.

4. Drahtseil nach einem der vorhergehenden Ansprüche, bei dem das Plastmaterial des gerippten Elements (1) diskontinuierliche Verstärkungsfasern enthält.

5. Drahtseil nach einem der vorhergehenden Ansprüche, bei dem die Schraubenlinien-Schlaglänge der Rillen (2) des unbelasteten Kerns beim Fehlen der Litzen wenigstens 75%, vorzugsweise wenigstens 95% der Schraubenlinien-Schlaglänge der Litzen in dem Seil beträgt.

6. Drahtseil nach einem der vorhergehenden Ansprüche, bei dem jede Litze - im Querschnitt in einer normalen Ebene zur Längsachse des Kerns - eine kompakte Struktur aufweist, bei der die Außendrähte Außenränder haben, die Bogen einer Ellipse sind, welche die Litze umschreibt.

7. Verfahren zur Herstellung eines Drahtseils, das Drahtlitzen mit einem gegebenen Durchmesser umfaßt, die schraubenförmig bei einer gegebenen Schlaglänge verlaufen und symmetrisch im Abstand um einen Kern angeordnet sind, wobei das Verfahren folgende Schritte aufweist:
(a) Bereitstellen eines Kerns, der ein geripptes, festes, extrudiertes Element (1) aus Polymer-Material umfaßt, das wahlweise ein in der Mitte befindliches Verstärkungselement aus Fasermaterial oder einem metallischen Material enthält, wobei das gerippte Elemente (1) schraubenförmige Rillen (2) hat, die symmetrisch im Abstand zueinander um dessen Außenfläche angeordnet sind, wobei jede Rille (2) - im Querschnitt in einer normalen Ebene zur Längsachse des Kerns - die Form eines Bogens einer Ellipse (E) hat, deren Nebenachse die Kernachse schneidet, wobei die kleinere Abmessung (d₂) der Ellipse (E) gleich dem gegebenen Durchmesser ist, dadurch gekennzeichnet, daß die Winkelöffnung (α) des Bogens im Verhältnis zum Schnittpunkt von Haupt- und Nebenachse der Ellipse (E) mindestens gleich (360/n) + 30° ist, wobei n die Zahl der Rillen (2) ist, wobei die Rillen (2) einen solchen Abstand zueinander haben, daß die Drahtlitzen keinen Kontakt miteinander haben, und wobei die Schraubenlinien-Schlaglänge der Rillen (2) kleiner als die gegebene Schlaglänge ist, von einem Kern-Zuführungsmittel;
(b) Zuführen des Kerns in Axialrichtung zu einem Seilschließmittel bei gleichzeitigem Zuführen von Litzen von einem Litzen-Zuführungsmittel, das um die Kernachse rotiert, wobei die Litzen durch das Seilschließmittel in die Rillen des Kerns eingeführt werden;
(c) Herausziehen des Seils aus dem Seilschließmittel mit einer linearen Geschwindigkeit, die der Rotationsgeschwindigkeit des Litzen-Zuführungsmittels entspricht; und
(d) Rotationsanpassen des Kern-Zuführungsmittels, um den Kern im erforderlichen Umfang zu entdrallen, um die Rillen-Schlaglänge auf den Seilschlag abzustimmen, so daß die Wirkung des Spannens der Seilstruktur gegeben ist.

## Revendications

1. Câble métallique comprenant des torons de diamètre donné s'étendant hélicoïdalement et étant symétriquement espacés autour d'une âme, comprenant un élément extrudé cannelé solide (1) en une matière polymère, contenant au choix un élément de renforcement central en une matière fibreuse ou métallique, l'élément cannelé (1) comportant des rainures hélicoïdales (2), symétriquement espacées autour de sa surface externe, l'espacement des rainures (2) étant tel que les torons, agencés dans les rainures respectives sont hors de contact mutuel, chaque rainure (2) - en coupe transversale dans un plan perpendiculaire à l'axe longitudinal de l'âme - ayant la forme d'un arc d'une ellipse (E), dont l'axe mineur coupe l'axe de l'âme, la dimension mineure (d₂) de l'ellipse (E) étant égale audit diamètre donné, caractérisé en ce que la distance angulaire (α) entre l'arc et le point d'intersection des axes majeur et mineur de l'ellipse (E) est au moins égale à (360/n)+30 degrés, où n représente le nombre de rainures (2), le pas hélicoïdal des rainures (2) de l'âme non sollicitée, en l'absence de torons, étant inférieur au pas hélicoïdal des torons dans le câble, de sorte à assurer l'effet de serrage de la structure de câble.

2. Câble métallique selon la revendication 1, dans lequel le diamètre de l'élément de renforcement représente de 80 à 95% du diamètre de base (d₃) de l'élément cannelé (1).

3. Câble métallique selon la revendication 1, dans lequel le diamètre de l'élément de renforcement représente de 50 à 80% du diamètre de base (d₃) de l'élément cannelé (1).

4. Câble métallique selon l'une quelconque des revendications précédentes, dans lequel la matière plastique de l'élément cannelé (1) contient des fibres de renforcement discontinues.

5. Câble métallique selon l'une quelconque des revendications précédentes, dans lequel le pas hélicoïdal des rainures (2) de l'âme non sollicitée, en l'absence de torons, représente au moins 75%, de préférence au moins 95% du pas hélicoïdal des torons dans le câble.

6. Câble métallique selon l'une quelconque des revendications précédentes, dans lequel chaque toron - en coupe transversale perpendiculaire à l'axe de l'âme - possède une structure pressée dans laquelle les fils métalliques externes comportent des bords externes qui constituent des arcs d'une ellipse encerclant le toron.

7. Procédé de fabrication d'un câble métallique comprenant des torons d'un diamètre donné s'étendant hélicoïdalement à un pas donné et étant espacés symétriquement autour d'une âme, le procédé comprenant:
(a) le fait de procurer, à partir d'un moyen de livraison d'âme, une âme comprenant un élément extrudé cannelé solide (1) en une matière polymère, contenant au choix un élément de renforcement central en une matière fibreuse ou métallique, l'élément cannelé (1) comportant des rainures hélicoïdales (2), espacées symétriquement autour de sa surface externe, chaque rainure (2) - en coupe transversale dans un plan perpendiculaire à l'axe longitudinal de l'âme - ayant la forme d'un arc d'une ellipse (E), dont l'axe mineur coupe l'axe de l'âme, la dimension mineure (d₂) de l'ellipse (E) étant égale audit diamètre donné, caractérisé en ce que la distance angulaire (α) entre l'arc et le point d'intersection des axes majeur et mineur de l'ellipse (E) est au moins égale à (360/n)+30 degrés, où n représente le nombre de rainures (2), l'espacement des rainures (2) étant tel que les torons seront hors de contact mutuel, le pas hélicoïdal des rainures (2) étant inférieur audit pas donné;
(b) le fait d'alimenter l'âme axialement à un moyen de fermeture de câble simultanément à l'approvisionnement de torons provenant d'un moyen de livraison de torons tournant autour de l'axe de l'âme, les torons étant introduits dans les rainures de l'âme par l'intermédiaire du moyen de fermeture de câble;
(c) le fait de retirer le câble du moyen de fermeture à une vitesse linéaire apparentée à la vitesse de rotation du moyen de livraison de torons; et
(d) le fait d'ajuster la rotation du moyen de livraison de torons de sorte à détordre le câble sur une distance nécessaire pour adapter le pas des rainures au câblage, de sorte à assurer l'effet de serrage de la structure de câble.
